# EUROPEAN PATENT APPLICATION

(11) **EP 2 916 228 A1**
(43) Date of publication of application: **09.09.2015**
(21) Application number: 13852030.9
(22) Date of filing: 28.08.2013
(51) Int. Cl.: G06F 11/14, G06F 9/445

(54) **METHOD AND SYSTEM FOR UPGRADING SOFTWARE OF DISTRIBUTED COMMUNICATION DEVICE**

(30) Priority: 01.11.2012 CN 201210428530
(71) Applicant: ZTE Corporation, Shenzhen, Guangdong 518057 (CN)
(72) Inventor: ZHAO, Zhenfu, Shenzhen Guangdong 518057 (CN); WANG, Lichun, Shenzhen Guangdong 518057 (CN)
(74) Representative: Wilson Gunn
(86) International application number: PCT/CN2013/082501
(87) International publication number: WO 2014/067335

(57) **Abstract**

Provided is a software upgrading method for a distributed communication device, and the method includes: softwares are upgraded in sequence in the main control units and the line card, new and old versions of a software are enabled to run simultaneously, and the new version of the software is enabled to replace seamlessly the old version of the software so as to enter a running state through active/standby state inversion between the active main control unit and the standby main control unit. In addition, the software of the control plane and of the management plane is upgraded on the line card according to the disclosure, and the software of the forwarding plane of the line card is upgraded as required so as to avoid unnecessary service interruption arisen from the software upgrading, thus improving reliability and availability of services, avoiding severe economic loss resulted from the service interruption and improving user experience

## Description

### TECHNICAL FIELD

The disclosure relates to the technical field of communications, and in particular to a software upgrading method and system for a distributed communication device.

### BACKGROUND

With an increasing demand for accessing a network to acquire information at any time in any places, various wired and wireless terminals spring up and are connected to the network. In order to improve user experiences, network devices for bearing user network services in a network become increasingly important; if an anomaly arises in a network device, it may affect user access experiences, resulting in user churn, and may even affect operation of an enterprise's electronic commerce network, resulting in severe economic losses.

In network communication devices operating on a network, for performance and expandability consideration, many of the devices are distributed communication devices implemented on the basis of a multiprocessing operation system. In a communication device using a multiprocessing operation system, multiple service processes are used to cooperatively implement functions of the communication device such as routing learning and data forwarding. The communication device interacts with external devices, learns network route, and calculates and generates an optimum route table for use in a forwarding plane. Then the optimum route table is issued to the forwarding plane, which performs routing and forwarding of data according to the optimum route table.

During operation of the network device, since there may be malfunctions or newly-added functional features in the software, it is inevitable to encounter various software upgradings for the network device. In order to avoid service interruption arisen during a software upgrading of the network device, it is desired to consider a software upgrading method that supports uninterruptable services.

### SUMMARY

The technical problem to be solved by embodiments of the disclosure is to provide a software upgrading method and system for a distributed communication device, which can avoid unnecessary service interruption arisen during a software upgrading, thus improving reliability and availability of services and improving user experiences.

To this end, the technical solutions of embodiments of the disclosure are implemented as follows.

A software upgrading method for a distributed communication device, in which main control units include an active main control unit and a standby main control unit based on physical redundancy, the method including:
step 1:
   the active main control unit notifies the standby main control unit to launch a new version of a software and to run said new version of the software in a standby state, and performs data and data state recovery on said new version of the software on the standby main control unit through an old version of the software on the active main control unit; and
   active/standby state inversion between the active main control unit and the standby main control unit is performed;
step 2:
   a current active main control unit notifies a line card to cancel an old version of a software of a control plane and of a management plane and to launch a new version of the software of the control plane and of the management plane, and performs data and data state recovery on said new version of the software of the control plane and of the management plane of the line card through the current active main control unit; and
   the line card refreshes data of and a data state of a software of a forwarding plane.

In an embodiment, the active main control unit may include a first version manager and a first active standby manager, the standby main control unit may include a second version manager and a second active standby manager, and each software on the main control units may include a data recovery assembly;
the step 1 may include:
the first version manager notifies the second version manager to launch the new version of the software on the standby main control unit;
the data and data state recovery is performed on said new version of the software on the standby main control unit through the old version of the software on the active main control unit based on the data recovery assembly; and
after the data and data state recovery is finished, the first version manager notifies the first active standby manager to change a running state of the active main control unit to a standby state, and the second version manager notifies the second active standby manager to change a running state of the standby main control unit to an active state.
In an embodiment, the line card may include a third version manager, and each software on the main control units and the line card may include a data recovery assembly;
the step 2 may include:
after the active/standby state inversion between the active main control unit and the standby main control unit is finished, the third version manager cancels the old version of the software of the control plane and of the management plane and launches said new version of the software of the control plane and of the management plane;
the data and data state recovery is performed on said new version of the software of the control plane and of the management plane on the line card through the new version of the software on the current active main control unit based on a data recovery assembly; and
after the data and data state recovery performed on the line card is finished, the third version manager refreshes the data of and the data state of the software of the forwarding plane.

In an embodiment, the step 2 may further include:
after the data and data state recovery performed on the line card is finished and before the data of and the data state of the software of the forwarding plane are refreshed, the software of the forwarding plane on the line card is upgraded.

In an embodiment, the step 1 may further include:
after the active/standby state inversion between the active main control unit and the standby main control unit is finished, said old version of the software on an original active main control unit is upgraded to the new version of the software and the new version of the software runs in the standby state.

The disclosure further provides a software upgrading system for a distributed communication device, in which main control units include an active main control unit and a standby main control unit based on physical redundancy, the system including:
an active main control unit configured to notify the standby main control unit to launch a new version of a software, to perform data and data state recovery on said new version of the software on the standby main control unit through an old version of the software on the active main control unit, and to change a running state of the active main control unit to a standby state after the data and data state recovery is finished;
a standby main control unit configured to launch said new version of the software and run said new version of the software in a standby state, to cooperate with the active main control unit to perform the data and data state recovery on said new version of the software, and to change a running state of the standby main control unit to an active state after the data and data state recovery is finished; and
a line card configured to, after active/standby state inversion between the active main control unit and the standby main control unit is finished, cancel an old version of a software of a control plane and of a management plane and to launch a new version of the software of the control plane and of the management plane, and to perform data and data state recovery on said new version of the software of the control plane and of the management plane of the line card through a current active main control unit, and to refresh data of and a data state of a software of a forwarding plane after the data and data state recovery performed on the line card is finished.

In an embodiment, the active main control unit may include a first version manager and a first active standby manager, the standby main control unit may include a second version manager and a second active standby manager, and softwares on main control units each may include a data recovery assembly;

Specifically, the first version manager may be configured to notify the second version manager to launch the new version of the software on the standby main control unit, and after the data and data state recovery is finished, notify the first active standby manager to change the running state of the active main control unit to a standby state;
the data recovery assembly may be configured to perform, in the old version of the software on the active main control unit, the data and data state recovery on said new version of the software on the standby main control unit;
the second version manager may be configured to launch the new version of the software on the standby main control unit, and to, after the data and data state recovery is finished, notify the second active standby manager to change the running state of the standby main control unit to the active state;
the first active standby manager may be configured to perform the active/standby state inversion on the running state of the active main control unit; and
the second active standby manager may be configured to perform the active/standby state inversion on the running state of the standby main control unit.

In an embodiment, the line card may include a third version manager, and each software on the main control units and the line card may include a data recovery assembly;

Specifically, the third version manager may be configured to, after the active/standby state inversion between the active main control unit and the standby main control unit is finished, cancel the old version of the software of the control plane and of the management plane and to launch said new version of the software of the control plane and of the management plane, and to, after the data and data state recovery performed on the line card is finished, refresh the data of and the data state of the software of the forwarding plane; and
the data recovery assembly may be configured to perform, in a new version of a software of the current active main control unit, the data and data state recovery on said new version of the software of the control plane and of the management plane on the line card.

In an embodiment, the line card may be further configured to, after the data and data state recovery performed on the line card is finished and before the data of and the data state of the software of the forwarding plane are refreshed, upgrade the software of the forwarding plane of the line card.

In an embodiment, the active main control unit may be further configured to, after the active/standby state inversion between the active main control unit and the standby main control unit is finished, upgrade said old version of the software on an original active main control unit to the new version of the software and run the new version of the software in the standby state.

By means of the above technical solutions, the embodiment of the disclosure may have at least the following technical effects:
In the software upgrading method and system for a distributed communication device according to embodiments of the disclosure, softwares are upgraded in sequence in the main control units and the line card, new and old versions of a software are enabled to run simultaneously, and the new version of the software is enabled to replace seamlessly the old version of the software so as to enter a running state through active/standby state inversion between the active main control unit and the standby main control unit. In addition, in embodiments of the disclosure, the software of the control plane and of the management plane is upgraded on the line card, and the software of the forwarding plane of the line card is upgraded as required so as to avoid unnecessary service interruption arisen from the software upgrading, thus improving reliability and availability of services, avoiding severe economic loss resulted from the service interruption and improving user experiences.

### BRIEF DESCRIPTION OF THE DRAWINGS

Fig. 1 is a flow chart of a software upgrading method for a distributed communication device according to a first embodiment of the disclosure;
Fig. 2 is a flow chart of a software upgrading method for a distributed communication device according to a second embodiment of the disclosure;
Fig. 3 is a schematic structural diagram of a software upgrading system for a distributed communication device according to a third embodiment of the disclosure;
Fig. 4 is a sequence diagram showing interaction during software upgrading of a distributed access gateway according to an embodiment of the disclosure;
Fig. 5 is a schematic diagram showing a state before software upgrading of a distributed access gateway according to an embodiment of the disclosure;
Fig. 6 is a schematic diagram showing that a main controller 2 of a distributed access gateway launches a new version of a software and performs data and data state recovery according to an embodiment of the disclosure;
Fig. 7 is a schematic diagram showing that a running state of the main controller 2 of the distributed access gateway is changed to an active state according to an embodiment of the disclosure;
Fig. 8 is a schematic diagram showing that a line card of a distributed access gateway cancels an old version of a software according to an embodiment of the disclosure;
Fig. 9 is a schematic diagram showing that a new version of a software of a line card of a distributed access gateway enters a running state according to an embodiment of the disclosure; and
Fig. 10 is a schematic diagram showing that an old version of a software of a main controller 1 of a distributed access gateway is upgraded to a new version of the software according to an embodiment of the disclosure.

### DETAILED DESCRIPTION

In order further explain technical means adopted by the disclosure for achieving predetermined objectives and beneficial effects, the embodiments of the disclosure are elaborated below with reference to accompanying drawings and preferred embodiments as follows.

A first embodiment of the disclosure discloses a software upgrading method for a distributed communication device, in which main control units include an active main control unit and a standby main control unit based on physical redundancy, wherein
existing functions of the main control units (also referred to as main processing units) include system management, route calculation and the like in a communication device.

The active main control unit refers to a main processor on which softwares run in an active state and provide services to the outside.

The active main control unit refers to a main processor on which softwares run in a standby state and do not provide services to the outside, and the softwares can provide services to the outside only after being changed to the active state.

Existing functions of the line card include implementation of services such as management of forwarded data and data forwarding.

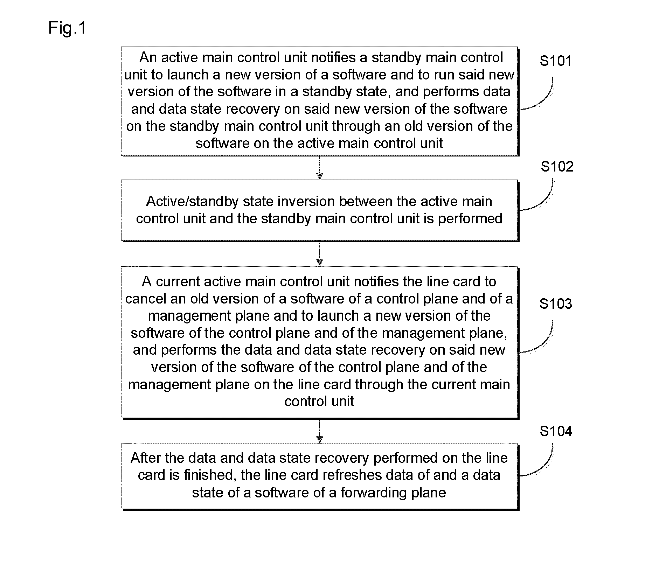

As shown in Fig. 1, the method includes below two stages.

Stage 1, upgrading of a software of a main controller, includes:
step S101, an active main control unit notifies a standby main control unit to launch a new version of a software and to run said new version of the software in a standby state, and performs data and data state recovery on said new version of the software on the standby main control unit through an old version of the software on the active main control unit.

Specifically, the active main control unit includes a first version manager and a first active standby manager; the standby main control unit includes a second version manager and a second active standby manager, and each software on the main control units each may include a data recovery assembly.

Step S101 specifically includes:
step A1, the first version manager notifies the second version manager to launch the new version of the software on the standby main control unit; and
step A2, the data and data state recovery is performed on said new version of the software on the standby main control unit through the old version of the software on the active main control unit based on a data recovery assembly; step A2 specifically includes:
   step A21, one or more communication links are established between the active main control unit and the standby main control unit through respective data recovery assemblies; and
   step A22, the data and data state are synchronized to the new version of the software on the standby main control unit through the old version of the software on the active main control unit based on the data recovery assembly.

Accordingly, the data and data state synchronized from said new version of the software on the active main control unit are received through the new version of the software on the standby main control unit also based on the data recovery assembly.

Step S102, active/standby state inversion between the active main control unit and the standby main control unit is performed so that the non-upgraded old version of the software is in a standby running state and waits to be upgraded and the upgraded new version of the software is in an active running state.

Specifically, after the data and data state recovery is finished, the first version manager notifies the first active standby manager to change the running state of the active main control unit to the standby state, and the second version manager notifies the second active standby manager to change the running state of the standby main control unit to the active state.

Stage 2, upgrading of a software of the line card, includes:
Step S103, a current active main control unit notifies the line card to cancel an old version of a software of a control plane and of a management plane and to launch a new version of the software of the control plane and of the management plane, and performs the data and data state recovery on said new version of the software of the control plane and of the management plane on the line card through the current main control unit.

Specifically, the line card includes a third version manager, and softwares on the main control units and the line card each may include a data recovery assembly;
after the active/standby state inversion between the active main control unit and the standby main control unit, the third version manager cancels the old version of the software of the control plane and of the management plane on the line card and launches said new version of the software of the control plane and of the management plane;
the data and data state recovery is performed on said new version of the software of the control plane and of the management plane on the line card through the current active main control unit based on the data recovery assembly.

In step S103, the processing that the data and data state recovery is performed on the new version of the software of the control plane and of the management plane on the line card through the current active main control unit specifically includes:
step B1, one or more communication links are established between the current active main control unit and the line card based on the data recovery assembly; and
step B2, the data and data state are synchronized to the new version of the software of the control plane and of the management plane on the line card through the new version of the software on the current active main control unit based on the data recovery assembly.

Accordingly, the data and data state synchronized from the active main control unit are received through the new version of the software of the control plane and of the management plane on the line card based on the data recovery assembly.

Step S104, after the data and data state recovery performed on the line card is finished, the line card refreshes the data of and the data state of the software of the forwarding plane.

Specifically, after the data and data state recovery performed on the line card is finished, the third version manager refreshes the data of and the data state of the software of the forwarding plane.

Optionally, in stage 1 of the method according to the embodiment, before step S101, the method may further include:
the new version of the software is copied to a main control unit and the line card of the communication device; or before step S101, the new version of the software is copied to the main control unit of the communication device, then the line card requests the main control unit for the new version of the software and upgrades it.

The main control unit herein refers to a main control unit in the active state, i.e., the active main control unit, since the standby main control unit does not provide services to the system.

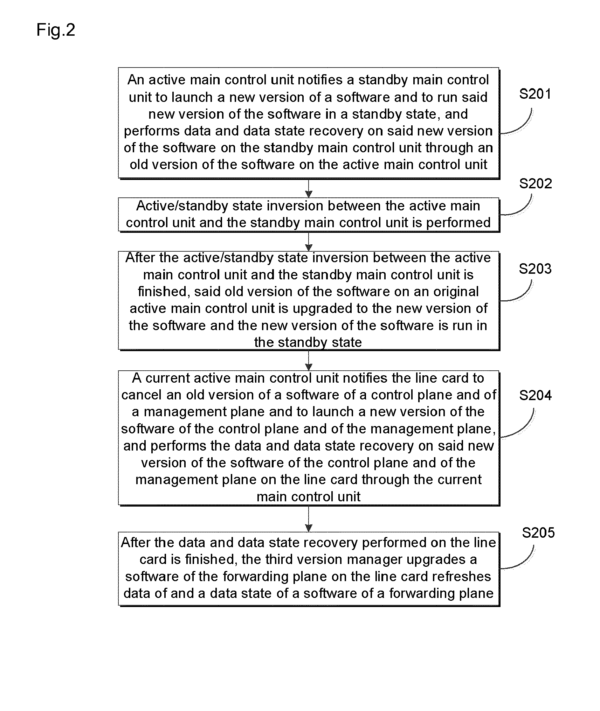

As shown in Fig. 2, a second embodiment of the disclosure discloses a software upgrading method for a distributed communication device, in which main control units include an active main control unit and a standby main control unit based on physical redundancy, and the method includes two stages:
Stage 1, upgrading of a software of a main controller includes below steps:
   step S201, an active main control unit notifies a standby main control unit to launch a new version of a software and to run said new version of the software in a standby state, and performs data and data state recovery on said new version of the software on the standby main control unit through an old version of the software on the active main control unit.

Specifically, the active main control unit includes a first version manager and a first active standby manager; the standby main control unit includes a second version manager and a second active standby manager, and each software on the main control units each may include a data recovery assembly.

Step S201 specifically includes:
step A1, the first version manager notifies the second version manager to launch the new version of the software on the standby main control unit; and
step A2, the data and data state recovery is performed on said new version of the software on the standby main control unit through the old version of the software on the active main control unit based on a data recovery assembly;
Step S202, active/standby state inversion between the active main control unit and the standby main control unit is performed so that the non-upgraded old version of the software is in a standby running state and waits to be upgraded and the upgraded new version of the software is in an active running state.

Specifically, after the data and data state recovery is finished, the first version manager notifies the first active standby manager to change the running state of the active main control unit to the standby state, and the second version manager notifies the second active standby manager to change the running state of the standby main control unit to the active state.

Step S203, after the active/standby state inversion between the active main control unit and the standby main control unit is finished, said old version of the software on an original active main control unit is upgraded to the new version of the software and the new version of the software is run in the standby state.

Stage 2, upgrading of a software of the line card, includes:
Step S204, a current active main control unit notifies the line card to cancel an old version of a software of a control plane and of a management plane and to launch a new version of the software of the control plane and of the management plane, and performs the data and data state recovery on said new version of the software of the control plane and of the management plane on the line card through the current main control unit.

Specifically, the line card includes a third version manager, and softwares on the main control units and the line card each may include a data recovery assembly;
after the active/standby state inversion between the active main control unit and the standby main control unit is finished, the third version manager cancels the old version of the software of the control plane and of the management plane on the line card and launches said new version of the software of the control plane and of the management plane;
the data and data state recovery is performed on said new version of the software of the control plane and of the management plane on the line card through the current active main control unit based on the data recovery assembly.

Step S205, after the data and data state recovery performed on the line card is finished, the third version manager upgrades a software of the forwarding plane on the line card refreshes the data of and the data state of the software of the forwarding plane.

Specifically, the process of upgrading a software of the forwarding plane by the third version manager on the line card is similar to the process of upgrading the software of the control plane and of the management plane on the line card, the reason why the upgrading of the software of the forwarding plane comes last lies in that the function of the forwarding plane affects directly service operation of the communication device, upgrading firstly the software of the control plane and of the management plane on the line card will not result in interruption of the service; the process of upgrading the software of the forwarding plane also needs to follow the below procedures: an old version of the software of the forwarding plane is cancelled and a new version of the software of the forwarding plane is launched, a data and data state recovery is performed on the new version of the software of the forwarding plane on the line card through the new version of the software on the current active main control unit, the data of and the data state of the new version of the software of the forwarding plane are refreshed, so as to validate the entries of the forwarding table of the new version of the software of the forwarding plane. Time taken by upgrading the software of the forwarding plane is very short, which has little effect on service operation.

Optionally, in stage 1 of the method according to the embodiment, before step S101, the new version of the software is copied to a main control unit and the line card of the communication device; or before step S201, the new version of the software is copied to the main control unit of the communication device, then the line card requests the main control unit for the new version of the software.

The main control unit herein refers to a main control unit in the active state, i.e., the active main control unit, since the standby main control unit does not provide services to the system.

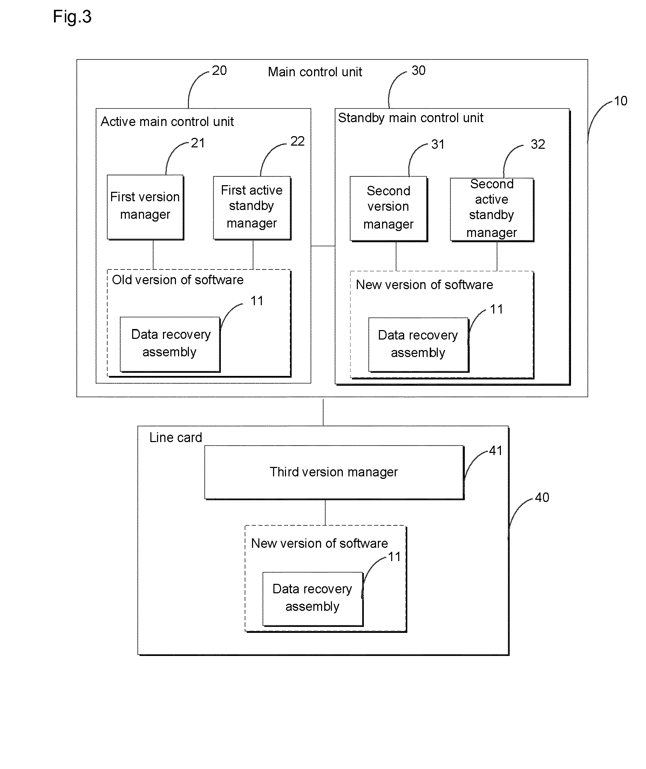

As shown in Fig. 3, a third embodiment of the disclosure disclose a software upgrading system for a distributed communication device, in which an active main control unit 10 includes a standby main control unit 20 and a line card 30 based on physical redundancy, and the system includes:
1) the active main control unit 20 configured to notify the standby main control unit to launch a new version of a software, to perform data and data state recovery on said new version of the software on the standby main control unit 30 through an old version of the software on the active main control unit 20, and to change a running state of the active main control unit to a standby state after the data and data state recovery is finished.
2) the standby main control unit 30 configured to launch said new version of the software and run said new version of the software in a standby state, to cooperate with the active main control unit 20 to perform the data and data state recovery on said new version of the software, and to change a running state of the standby main control unit to an active state after the data and data state recovery is finished.

Specifically, the active main control unit 200 includes a first version manager 21 and a first active standby manager 22, the standby main control unit 30 may include a second version manager 31 and a second active standby manager 32, and each software on the main control units may include a data recovery assembly 11;
the first version manager 21 is configured to notify the second version manager 31 to launch the new version of the software on the standby main control unit 30, and to, after the data and data state recovery, notify the first active standby manager 22 to change the running state of the active main control unit 22 to a standby state so that the non-upgraded old version of the software enters a standby running state and waits to be upgraded;
the data recovery assembly 11 is configured to perform, in the old version of the software on the active main control unit 20, the data and data state recovery on said new version of the software on the standby main control unit 30;
the second version manager 31 is configured to launch the new version of the software on the standby main control unit 30, and to, after the data and data state recovery is finished, notify the second active standby manager 32 to change the running state of the standby main control unit 30 to the active state so that the upgraded new version of the software enters an active running state;
the first active standby manager 22 is configured to perform the active/standby state inversion on the running state of the active main control unit 20; and
the second active standby manager 32 is configured to perform the active/standby state inversion on the running state of the standby main control unit 30.
3) The line card 40 configured to, after active/standby state inversion between the active main control unit 20 and the standby main control unit 30 is finished, cancel an old version of a software of a control plane and of a management plane and to launch a new version of the software of the control plane and of the management plane, and to perform the data and data state recovery on said new version of the software of the control plane and of the management plane on the line card through a current active main control unit, and to, after the data and data state recovery performed on the line card is finished, refresh the data of and the data state of the software of the forwarding plane.

Specifically, the line card 40 includes a third version manager 41, and each software on the main control units and the line card may include a data recovery assembly.

The third version manager 41 is configured to, after the active/standby state inversion between the active main control unit 20 and the standby main control unit 30 is finished, cancel the old version of the software of the control plane and of the management plane on the line card 40 and launch said new version of the software of the control plane and of the management plane, and to, after the data and data state recovery performed on the line card 40 is finished, refresh the data of and the data state of the software of the forwarding plane.

The data recovery assembly 11 is configured to perform, in the old version of the software on the active main control unit 20, the data and data state recovery on said new version of the software of the control plane and of the management plane on the line card 40.

As shown in Fig. 3, a fourth embodiment of the disclosure discloses a software upgrading system for a distributed communication device that is roughly the same as the software upgrading system for a distributed communication device according to the third embodiment, and the difference lies in that in the system according to the embodiment,
the active main control unit 20 is further configured to, after the active/standby state inversion between the active main control unit 20 and the standby main control unit 30 is finished, upgrade said old version of the software on an original active main control unit 20 to the new version of the software and run the new version of the software in the standby state.

In addition, the line card 40 is further configured to, after the data and data state recovery performed on the line card 40 is finished and before the data of and the data state of the software of the forwarding plane are refreshed, upgrade the software of the forwarding plane of the line card 40.

Specifically, the process of upgrading a software of the forwarding plane by the third version manager 41 on the line card 40 is similar to the process of upgrading the software of the control plane and of the management plane on the line card 40, the reason why the upgrading of the software of the forwarding plane comes last lies in that the function of the forwarding plane affects directly service operation of the communication device, upgrading firstly the software of the control plane and of the management plane on the line card 40 will not result in interruption of the service; the process of upgrading the software of the forwarding plane also needs to follow the below procedures: an old version of the software of the forwarding plane is cancelled and a new version of the software of the forwarding plane is launched, a data and data state recovery is performed on the new version of the software of the forwarding plane on the line card 40 through the new version of the software on the current active main control unit 20, the data of and the data state of the new version of the software of the forwarding plane are refreshed, so as to validate the entries of the forwarding table of the new version of the software of the forwarding plane. Time taken by upgrading the software of the forwarding plane is very short, which has little effect on service operation.

Based on the above embodiments, an application example of the disclosure is described, the application scenario and implementation process of the application example are as follows.

Application scenario: upgrading of a software of an access gateway.

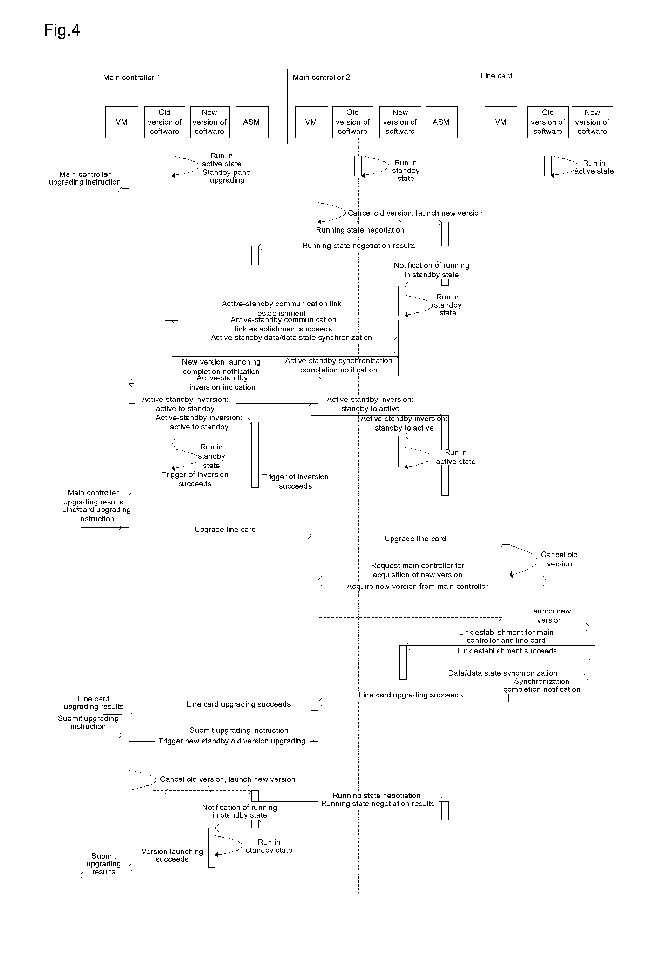

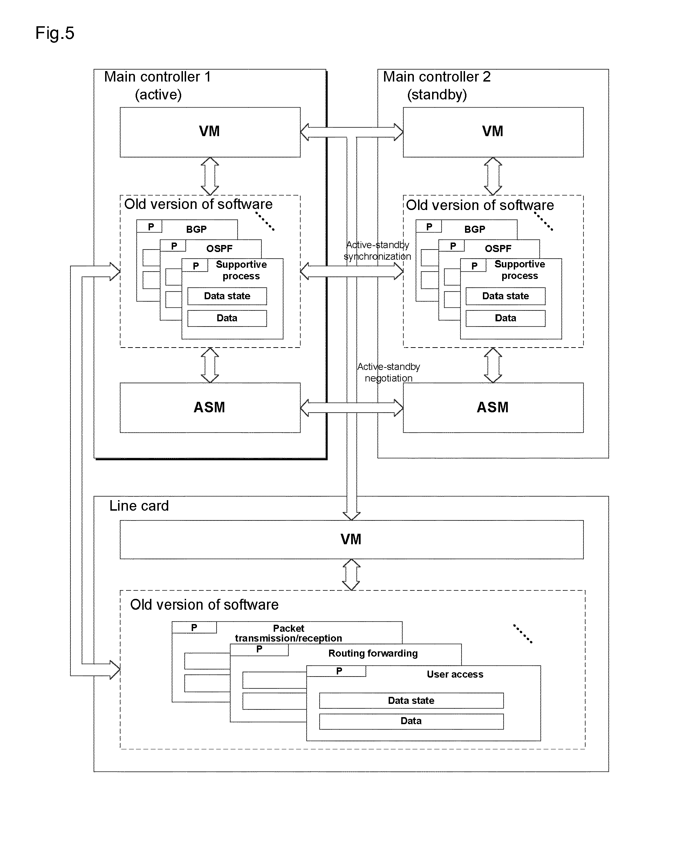

Fig. 4 is a sequence diagram showing interaction during software upgrading of a distributed access gateway, Fig. 5 to Fig. 10 show various states during the software upgrading of the distributed access gateway; the access gateway in the drawings is a distributed communication device for implementing access of users to a network, and for high reliability and high availability consideration, the access gateway is configured with active/standby main control panels; Fig. 5 shows a state before upgrading of the software of the distributed access gateway, a processing unit on the active control panel is a main controller 1 while a processing unit on the standby main control panel is a main controller 2. Furthermore, 4 line cards are configured in order to implement access of users and forwarding processing. There are 80 processes running on the main control unit, such as a supportive process, a Border Gateway Protocol (BGP) process, a Routing Information Protocol (RIP) process, an Open Shortest Path First (OSPF) process, a Forward Information Base (FIB) process and the like. There are 30 processes running on the line card, such as a packet transmission/reception process, a routing forwarding process, a user access process and the like. Since running software versions may have malfunctions, services may be interrupted randomly. Thus it is required to consider upgrading the version of a software so as to overcome device malfunctions. The four line cards of the access gateway are upgraded in a line card by line card way. That is to say, each line card is upgraded in sequence, line card 1 is upgraded first, then line card 2 is upgraded, and then line card 3 is upgraded, finally line card 4 is upgraded.

The upgrading of the version of the software of the access gateway relates to below assemblies: an old version of the software, a new version of the software, a version manager, and an active standby manager. Specifically, the old version of the software and the new version of the software implement a same function, the version manager takes charge of upgrading of the version of a software, failure rollback and the like, the active standby manager takes charge of active/standby management of new/old versions of a software, and triggering active/standby state inversion of the new version of the software after data and data state recovery from the old version to the new version of the software, so that the new version of the software can replace seamlessly the old version of the software, thereby implementing software upgrading without service interruption.

Processing steps for implementing, on a network, a software upgrading method for a distributed access gateway are as follows.

Stage 1, upgrading of a software of a main controller.

S1, before software upgrading, a new version of a software to which an old version of the software is to be upgraded needs to be copied to an active main controller of an access gateway (the device automatically copies it to a standby main controller); a new version of a software of the line card is acquired by request from the main controller;

S2, an old version of the software on a main controller 1 runs in an active state, a user sends a main controller software upgrading instruction to a Version Manager (VM) S3, after receiving the main controller software upgrading instruction, the VM on the main controller 1 sends a command to a VM on the main controller 2, the old version of the software is upgraded to a new version of the software and the new version of the software is launched on the main controller 2;

S4, after being launched, the new version of the software on the main controller 2 runs in a standby state; before running in the active state, the new version of the software on the main controller 2 does not provide service to the outside of the system;

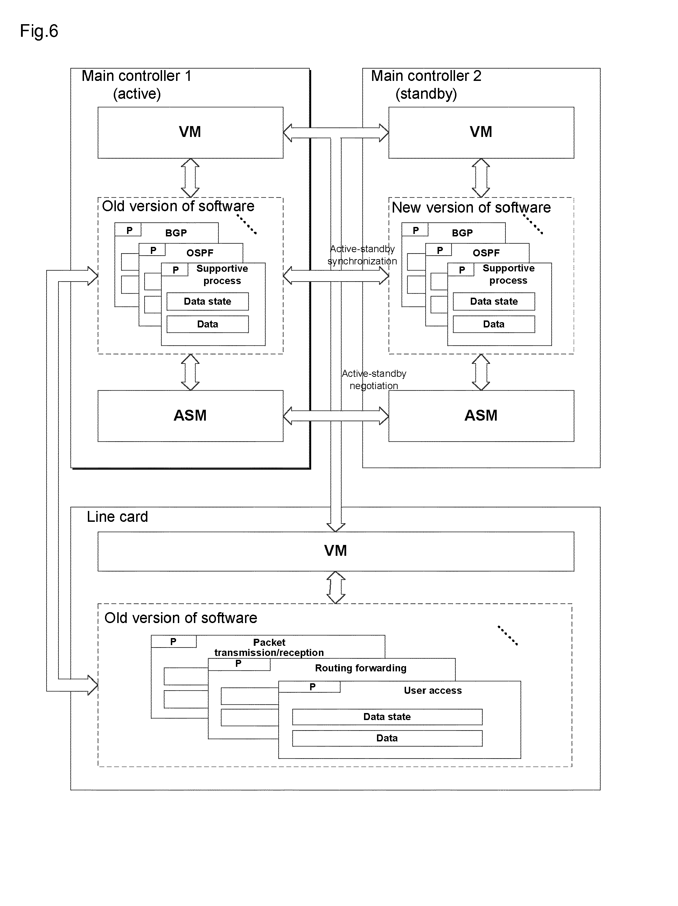

S5, as shown in Fig. 6, data and data state recovery is performed on the new version of the software on the main controller 2 through the old version of the software on the main controller 1, so that after entering a running state, the new version of the software can take over seamlessly the old version of the software to provide services to the outside; optionally, there may be one or more communication links for the data and data state recovery;

S6, after the data and data state recovery is finished, the new version of the software on the main controller 2 sends, through the VM on the main controller 2, a standby main controller new version launch completion notification to the VM on the main controller 1;

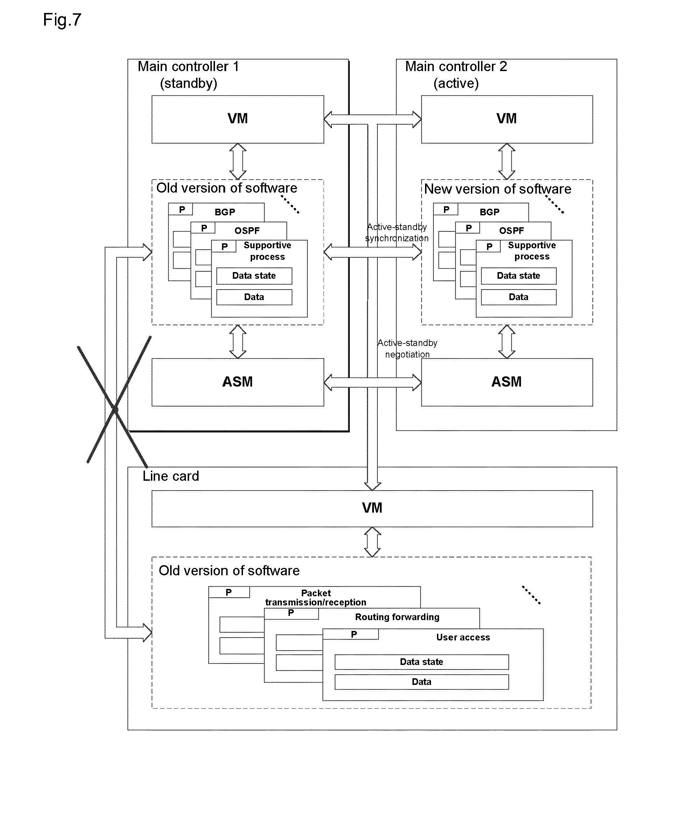

S7, after receiving the standby main controller new version launch completion notification, the VM on the main controller 1 triggers active/standby state inversion of the active main controller on an Active Standby Manager (ASM) on the main controller 1, as shown in Fig. 7. And the VM on the main controller 2 triggers active/standby state inversion of the standby main controller on an ASM on the main controller 2;

S8, the main controller 1 is changed to a new standby main controller, and the main controller 2 is changed to a new active main controller. A new version of the software on the new active main controller replaces the old version of the software and enters an active running state so as to provide service to the outside. The old version of the software on the new standby main controller does not provide services to the outside;

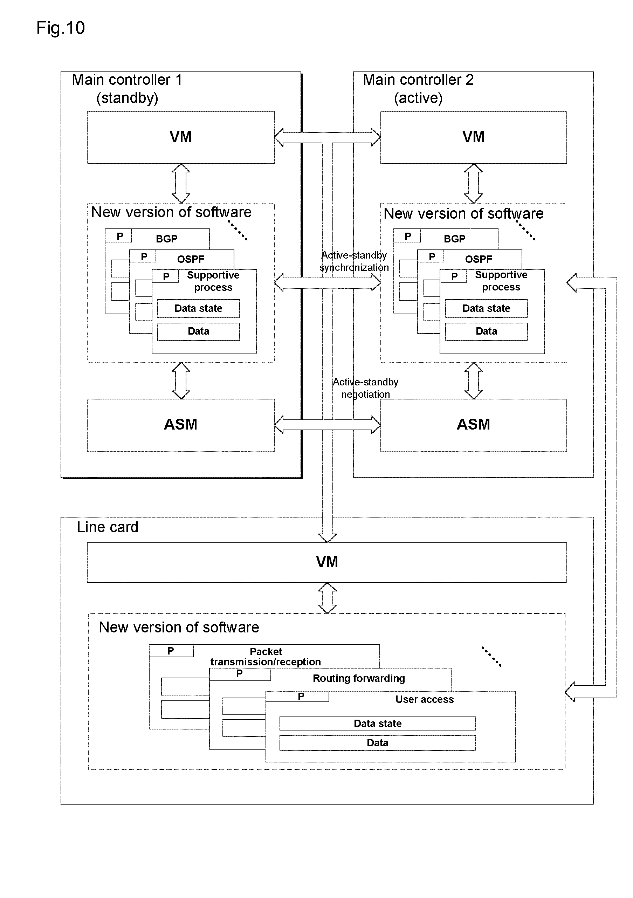

S9, optionally, as shown in Fig. 10, when the main controller 1 is changed to the new standby main controller, the old version of the software can be upgraded to a new version of the software and launched in the standby state; and

S10, the VM on the main controller 1 feeds a result of upgrading success back to the user, and indicates that subsequent upgrading of a software of the line card can be implemented.

Stage 2, upgrading of a software of a line card (upgrading is performed line card by line card, line card 1 is taken as an example to elaborate, other line cards have a same upgrading process).

S11, after the upgrading of the software of the main controller succeeds, the user sends a software upgrading instruction for the line card 1 to the VM of the main controller 2;

S12, after receiving the software upgrading instruction for the line card 1, the VM on the main controller 2 sends a line card software upgrading instruction to a VM on the line card 1;

S13, after receiving the line card software upgrading instruction, the VM on the line card 1 sends a cancellation instruction to the old version of the software on the line card;

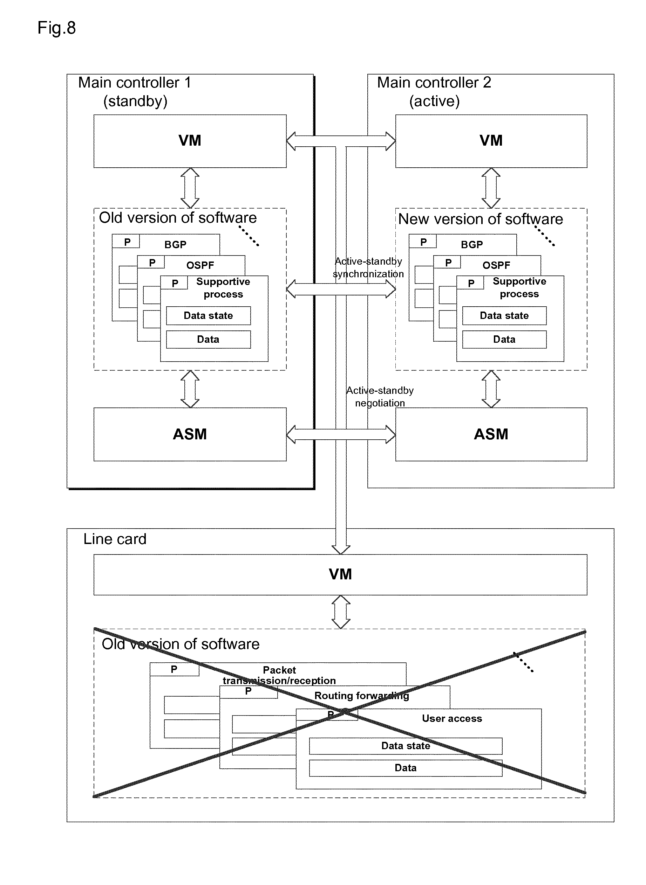

S14, as shown in Fig. 8, after cancelling successfully the old version of the software of the control plane and of the management plane, the VM on the line card 1 acquires the new version of the software from the main controller 2, upgrades and launches control-plane and management-plane functions of the new version of the software of the control plane and of the management plane on the line card;

S15, in order to avoid service interruption, before entering a running state, the new version of the software of the control plane and of the management plane on the line card 1 needs to recover data and data state required for providing services. The data and data state recovery of the new version of software of the control plane and of the management plane on the line card is performed by the main controller;

S16, after the data and data state recovery of the new version of software of the control plane and of the management plane on the line card 1 is finished, forwarding-plane functions are upgraded as required and refreshing of a forwarding table is triggered so that a new version of the forwarding table is validated and a data and data state synchronization completion notification is sent to the VM on the line card;

S17, after receiving the new version software recovery completion notification for the new version of the software of the control plane and of the management plane, the VM on the line card 1 feeds upgrading results of the software on the line card back to the VM on the main controller 2;

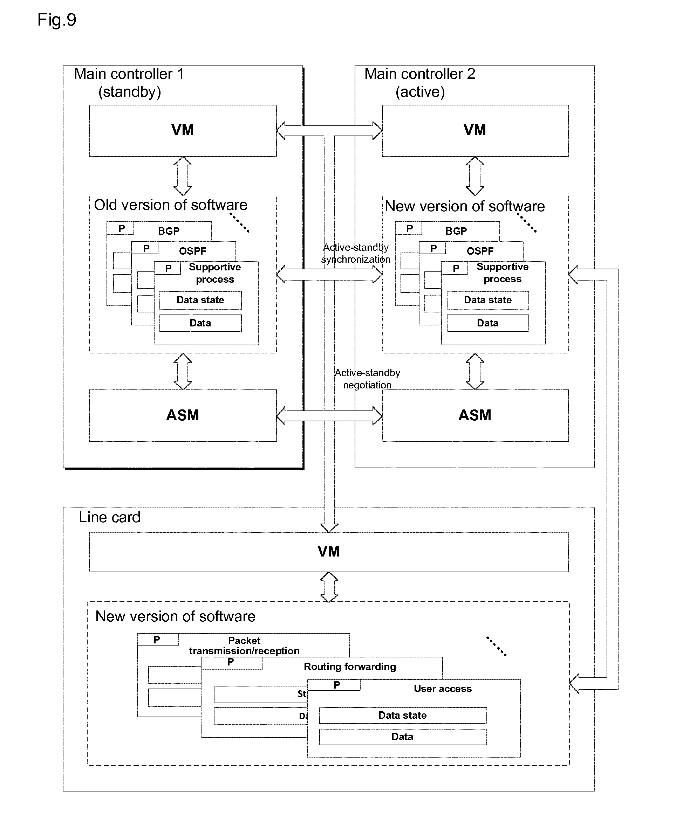

S18, as shown in Fig. 9, the line card 1 enters the running state, and the user can upgrade line cards 2 to 4 on a line card basis.

By description based on specific embodiments, technical means adopted by the disclosure for achieving predetermined objectives and beneficial effects should be understood more thoroughly and specifically, however, the drawings are designed solely for purposes of illustration and not as a definition of the limits of the invention.

### INDUSTRIAL APPLICABILITY

In the technical solutions according to embodiments of the disclosure, softwares are upgraded in sequence in the main control units and the line card, new and old versions of a software are enabled to run simultaneously, and the new version of the software is enabled to replace seamlessly the old version of the software so as to enter a running state through active/standby state inversion between the active main control unit and the standby main control unit. In addition, the software of the control plane and of the management plane is upgraded on the line card according to the disclosure, and the software of the forwarding plane of the line card is upgraded as required so as to avoid unnecessary service interruption arisen from the software upgrading, thus improving reliability and availability of services, avoiding severe economic loss resulted from the service interruption and improving user experiences.

## Claims

1. A software upgrading method for a distributed communication device, in which main control units comprise an active main control unit and a standby main control unit based on physical redundancy, the method comprising:
step 1:
notifying, by the active main control unit, the standby main control unit to launch a new version of a software and to run said new version of the software in a standby state, and performing data and data state recovery on said new version of the software on the standby main control unit through an old version of the software on the active main control unit; and
performing active/standby state inversion between the active main control unit and the standby main control unit;
step 2:
notifying, by a current active main control unit, a line card to cancel an old version of a software of a control plane and of a management plane and to launch a new version of the software of the control plane and of the management plane, and performing data and data state recovery on said new version of the software of the control plane and of the management plane of the line card through the current active main control unit; and
refreshing, by the line card, data of and a data state of a software of a forwarding plane.

2. The software upgrading method for a distributed communication device according to claim 1, wherein the active main control unit comprises a first version manager and a first active standby manager, the standby main control unit comprises a second version manager and a second active standby manager, and each software on the main control units comprises a data recovery assembly;
the step 1 comprises:
notifying, by the first version manager, the second version manager to launch the new version of the software on the standby main control unit;
performing the data and data state recovery on said new version of the software on the standby main control unit through the old version of the software on the active main control unit based on the data recovery assembly; and
after the data and data state recovery is finished, notifying, by the first version manager, the first active standby manager to change a running state of the active main control unit to a standby state, and notifying, by the second version manager, the second active standby manager to change a running state of the standby main control unit to an active state.

3. The software upgrading method for a distributed communication system according to claim 1, wherein the line card comprises a third version manager, and each software on the main control units and the line card comprises a data recovery assembly;
the step 2 comprises:
after the active/standby state inversion between the active main control unit and the standby main control unit is finished, cancelling, by the third version manager, the old version of the software of the control plane and of the management plane and launching said new version of the software of the control plane and of the management plane;
performing the data and data state recovery on said new version of the software of the control plane and of the management plane on the line card through the new version of the software on the current active main control unit based on a data recovery assembly; and
after the data and data state recovery performed on the line card is finished, refreshing, by the third version manager, the data of and the data state of the software of the forwarding plane.

4. The software upgrading method for a distributed communication device according to claim 1, wherein the step 2 further comprises:
after the data and data state recovery performed on the line card is finished and before the data of and the data state of the software of the forwarding plane are refreshed, upgrading the software of the forwarding plane on the line card.

5. The software upgrading method for a distributed communication device according to any one of claims 1 to 4, wherein the step 1 further comprises:
after the active/standby state inversion between the active main control unit and the standby main control unit is finished, upgrading said old version of the software on an original active main control unit to the new version of the software and running the new version of the software in the standby state.

6. A software upgrading system for a distributed communication device, in which main control units comprise an active main control unit and a standby main control unit based on physical redundancy, the system comprising:
an active main control unit configured to notify the standby main control unit to launch a new version of a software, to perform data and data state recovery on said new version of the software on the standby main control unit through an old version of the software on the active main control unit, and to change a running state of the active main control unit to a standby state after the data and data state recovery is finished;
a standby main control unit configured to launch said new version of the software and run said new version of the software in a standby state, to cooperate with the active main control unit to perform the data and data state recovery on said new version of the software, and to change a running state of the standby main control unit to an active state after the data and data state recovery is finished; and
a line card configured to, after active/standby state inversion between the active main control unit and the standby main control unit is finished, cancel an old version of a software of a control plane and of a management plane and to launch a new version of the software of the control plane and of the management plane, and to perform data and data state recovery on said new version of the software of the control plane and of the management plane of the line card through a current active main control unit, and to refresh data of and a data state of a software of a forwarding plane after the data and data state recovery performed on the line card is finished.

7. The software upgrading system for a distributed communication device according to claim 6, wherein the active main control unit comprises a first version manager and a first active standby manager, the standby main control unit comprises a second version manager and a second active standby manager, and softwares on main control units each comprises a data recovery assembly;
wherein the first version manager is configured to notify the second version manager to launch the new version of the software on the standby main control unit, and to, after the data and data state recovery is finished, notify the first active standby manager to change the running state of the active main control unit to a standby state;
the data recovery assembly is configured to perform, in the old version of the software on the active main control unit, the data and data state recovery on said new version of the software on the standby main control unit;
the second version manager is configured to launch the new version of the software on the standby main control unit, and to, after the data and data state recovery is finished, notify the second active standby manager to change the running state of the standby main control unit to the active state;
the first active standby manager is configured to perform the active/standby state inversion on the running state of the active main control unit; and
the second active standby manager is configured to perform the active/standby state inversion on the running state of the standby main control unit.

8. The software upgrading system for a distributed communication device according to claim 6, wherein the line card comprises a third version manager, and each software on the main control units and the line card comprises a data recovery assembly;
wherein the third version manager is configured to, after the active/standby state inversion between the active main control unit and the standby main control unit is finished, cancel the old version of the software of the control plane and of the management plane and to launch said new version of the software of the control plane and of the management plane, and to, after the data and data state recovery performed on the line card is finished, refresh the data of and the data state of the software of the forwarding plane; and
the data recovery assembly is configured to perform, in a new version of a software of the current active main control unit, the data and data state recovery on said new version of the software of the control plane and of the management plane on the line card.

9. The software upgrading system for a distributed communication device according to claim 6, wherein the line card is further configured to, after the data and data state recovery performed on the line card is finished and before the data of and the data state of the software of the forwarding plane are refreshed, upgrade the software of the forwarding plane of the line card.

10. The software upgrading system for a distributed communication device according to any one of claims 6 to 9, wherein the active main control unit is further configured to, after the active/standby state inversion between the active main control unit and the standby main control unit is finished, upgrade said old version of the software on an original active main control unit to the new version of the software and run the new version of the software in the standby state.
